Europäisches Patentamt

**European Patent Office**

Office européen des brevets

(11) Numéro de publication: **0 274 307 B1**

# FASCICULE DE BREVET EUROPEEN

(45) Date de publication de fascicule du brevet:
**17.07.91**

(21) Numéro de dépôt: **87402759.2**

(22) Date de dépôt: **04.12.87**

(51) Int. Cl.⁵: **H02K 5/26**

(54) **Machine électrique à moyens de montage et d'ajustement de position de fixation et/ou de transmission.**

(30) Priorité: **05.12.86 FR 8617040**

(43) Date de publication de la demande:
**13.07.88 Bulletin 88/28**

(45) Mention de la délivrance du brevet:
**17.07.91 Bulletin 91/29**

(84) Etats contractants désignés:
**DE ES FR GB IT**

(56) Documents cités:
**WO-A-86/02788**
**FR-A- 1 098 857**
**US-A- 4 455 498**

(73) Titulaire: **SOCIETE ELECTROMECANIQUE DU NIVERNAIS - SELNI**
**1 à 6, rue des Grands Champs**
**F-58000 Nevers(FR)**

(72) Inventeur: **Huron, Claude**
**THOMSON-CSF SCPI 19, avenue de Messine**
**F-75008 Paris(FR)**
Inventeur: **David, André**
**THOMSON-CSF SCPI 19, avenue de Messine**
**F-75008 Paris(FR)**

(74) Mandataire: **Phan, Chi Quy et al**
**THOMSON-CSF SCPI**
**F-92045 PARIS LA DEFENSE CEDEX 67(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne une machine électrique à moyens de montage et d'ajustement de position et/ou de transmission.

Les machines ou moteurs électriques connus ont souvent des entraxes longitudinaux de fixation qui varient avec des changements d'épaisseur de leur circuit magnétique déterminant leurs caractéristiques de puissance, de vitesse, etc. même si elles appartiennent à un même type de construction.

Les utilisateurs de ces machines électriques connues doivent adapter leurs réalisations à cette diversité d'entraxes de fixation de ces machines et dans certains cas prévoir dans ces réalisations des moyens d'ajustement de position de transmission de ces machines. Il en résulte une grave entrave à une standardisation des réalisations de ces utilisateurs en vue d'abaisser leur coût. Pour fournir à la demande d'un utilisateur des machines ou moteurs électriques connus d'un même type de construction ayant des puissances ou des vitesses différentes mais exigeant des entraxes identiques de fixation, les constructeurs ont de grandes difficultés pour standardiser leur fabrication afin d'obtenir un meilleur prix de revient étant donné que dans les machines électriques une différence de puissance ou de vitesse entraîne une différence d'épaisseur de circuit magnétique et qu'une variation d'épaisseur de circuit magnétique entraîne à son tour une variation d'écartement des flasques et par conséquent une variation d'entraxe de fixation. Des moyens de montage connus sont décrits dans le fascicule de brevet FR-A-1098857, WO-A-8602788 et US-A-4455498.

La présente invention ayant pour but d'éviter ces inconvénients permet de réaliser des machines électriques économiques à moyens de montage et d'ajustement de position de fixation et/ou de transmission.

Selon l'invention, une machine électrique est caractérisée en ce qu'elle comprend des moyens de montage et d'ajustement de position de fixation et/ou de transmission constitués d'une part par des éléments à position réglable choisis parmi les anneaux et bagues et d'autre part par des supports de ces éléments à position réglable, formés dans des parties des flasques de la machine, choisies parmi des moyeux et les pattes de fixation de ces flasques.

Pour mieux faire comprendre l'invention, on en décrit ci-après un certain nombre d'exemples de réalisation, illustré par des dessins ci-annexés dont

- les figures 1a, 1b, 1c représentent schématiquement et en coupe partielle, des machines électriques sous forme de moteurs électriques d'un même type de construction, réalisées selon l'invention présentant respectivement des épaisseurs de circuit magnétique différentes e1, e2, e3 et des entraxes identiques de fixation E,
- la figure 2 représente schématiquement, en coupe partielle, d'une partie d'une machine électrique selon une première variante de réalisation de la machine de la figure 1, et
- les figures 3a, 3b représentent schématiquement, en coupe partielle, les machines électriques selon une deuxième variante de réalisation des machines des figures 1a, 1b, présentant respectivement des épaisseurs de circuit magnétique différentes e1, e2, et des entraxes identiques de fixation.

L'invention est applicable à tous types de machines ou moteurs électriques. Pour simplifier la description un seul de ces types de machines ou moteurs est illustré dans les dessins et décrit ci-après.

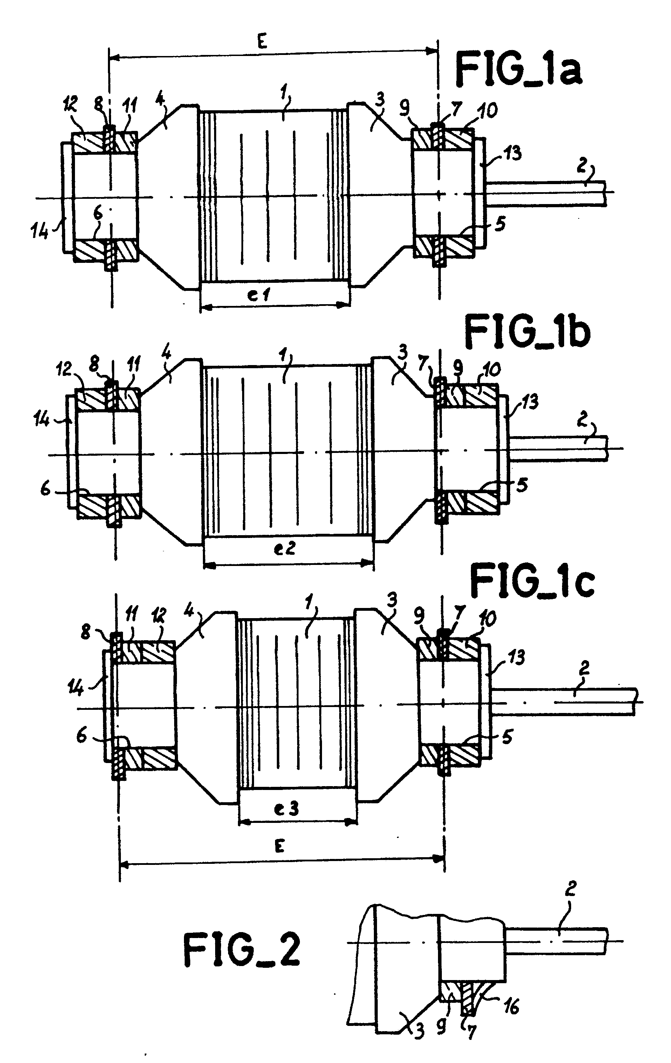

Une machine ou moteur électrique schématiquement illustré dans les figures 1 à 3 comprend un stator ou inducteur 1 définissant, avec un rotor ou induit dont l'arbre 2 est seul visible, un circuit magnétique e. Aux deux extrémités de ce circuit magnétique sont montés deux flasques d'extrémité 3, 4 qui supportent des paliers de l'arbre 2, et protègent des bobinages non représentés de cette machine ou moteur électrique.

Selon une caractéristique importante, la machine électrique comprend des moyens de montage et d'ajustement de position de fixation et/ou de transmission constitués d'une part par des éléments à position réglable choisis parmi les anneaux et les bagues, et d'autre part par des supports de ces éléments à position réglable, formés dans des parties des flasques de la machine, choisies parmi les moyeux et les pattes de fixation de ces flasques.

Dans les exemples de réalisation illustrés dans les figures 1a, 1b, 1c, la machine électrique comprend comme moyens de montage et d'ajustement de position de fixation et/ou de transmission, d'une part dans les extrémités extérieures des flasques 3, 4 deux portées ou moyeux 5, 6, servant de supports et d'autre part deux anneaux de montage 7, 8, et plusieurs anneaux de positionnement à épaisseurs différentes 9, 10, 11, 12, deux dans les exemples illustrés, montées sur ces moyeux 5, 6, et deux plaquettes d'arrêt 13, 14 fixées contre les extrémités libres de ces moyeux en vue d'y bloquer ces anneaux de montage 7, 8 et anneaux de positionnement 9, 10, 11, 12.

Les sections transversales des moyeux 5, 6 et les formes intérieures des anneaux 7, 8, 9, 10, 11, 12 sont choisies parmi les formes circulaires et polygonales.

Les formes extérieures des anneaux de montage 7, 8 sont de préférence circulaires tandis que celles des anneaux de positionnement 9, 10, 11, 12 sont circulaires ou polygonales.

Dans les machines électriques connues, quand les épaisseurs de leurs circuits magnétiques varient, leur entraxe longitudinal de fixation varie également.

Dans les machines électriques réalisées selon l'invention, grâce à un arrangement facile des positions des anneaux de positionnement 9, 10, 11, 12 à épaisseurs différentes et des anneaux de montage 7, 8 sur les moyeux 5, 6 des flasques 3 et 4, les écartements des anneaux de montage 7 et 8 ou entraxes de fixation peuvent être maintenus constants à une valeur E dans ces machines malgré les différences d'épaisseurs e de leurs circuits magnétiques.

Dans l'exemple illustré, les machines ou moteurs électriques des figures 1a, 1b, 1c, ayant des circuits magnétiques de différentes épaisseurs respectivement e1, e2, e3 comprennent cependant un entraxe longitudinal identique E de fixation, obtenu par un arrangement adéquat entre les anneaux de montage 7, 8 et les anneaux de positionnement 9, 10, 11, 12 sur les moyeux 5, 6. Dans la machine ou moteur électrique à circuit magnétique d'épaisseur e1 (figure 1a), les anneaux de montage 7 et 8 se trouvent respectivement encadrés par des anneaux 9, 10 et 11, 12 et définissant un entraxe longitudinal de fixation E. Dans la machine ou moteur électrique (figure 1b) ayant un circuit magnétique d'épaisseur e2 plus grande que e1 (figure 1a) l'anneau de montage 7 est rapproché de l'anneau de montage 8 en vue de compenser cette différence de longueur entre e1 et e2 et maintenir constant l'entraxe de fixation à une valeur E, par un rangement de tous les deux anneaux de positionnement 9 et 10 sur le côté extérieur de cet anneau de montage 7. Dans le moteur (figure 1c) ayant un circuit magnétique d'épaisseur e3 plus faible que e1, l'anneau de montage 8 est éloigné de l'anneau de montage 7 en vue de compenser cette différence de longueur entre e1 et e3 et maintenir constante l'entraxe longitudinal de fixation E, par un déplacement de tous les deux anneaux de positionnement 11 et 12 sur le côté intérieur de cet anneau de montage 8.

Cette aptitude des machines électriques réalisées selon l'invention, d'avoir un entraxe longitudinal constant de fixation, malgré les différences dans les épaisseurs e1, e2, e3 ... de leurs circuits magnétiques permet aux utilisteurs de ces machines, de standariser facilement leurs réalisations ou produits.

Pour simplifier la mise en oeuvre de l'invention, dans une même gamme de machines électriques d'un même type de construction, les épaisseurs e de leurs circuits magnétiques sont déterminées de manière qu'elles varient entre deux machines consécutives de cette gamme, d'une valeur égale à l'une des valeurs préétablies et les anneaux de positionnement 9, 10, 11, 12 sont réalisés avec des épaisseurs égales à ces valeurs préétablies.

En effet, entre deux machines électriques consécutives d'une gamme, étant donné que leurs circuits magnétiques ont une différence d'épaisseurs e égale à l'une de ces valeurs préétablies, que les entraxes longitudinaux de fixation de ces deux machines ont en principe, de ce fait, une différence de longueur égale à cette différence d'épaisseurs e de leurs circuits magnétiques et que certains anneaux de positionnement sont réalisés avec une épaisseur égale à cette différence d'épaisseur e de circuits magnétiques ou cette différence de longueur d'entraxes longitudinaux de fixation, il suffit simplement d'enlever ou d'ajouter un de ces anneaux de positionnement entre les deux anneaux de montage 7, 8 (figures 1a, 1b, 1c) de l'une de ces deux machines électriques pour ajuster les positions de ces anneaux et obtenir des entraxes longitudinaux identiques sur ces deux machines.

Selon une première variante de réalisation, schématiquement illustrée dans la figure 2, dans une machine électrique, le ou les anneaux de positionnement 9, 10, 11, 12, situés entre une plaquette d'arrêt 13 ou 14 et un anneau de montage 7 ou 8, et cette plaquette d'arrêt associée 13 ou 14 sont remplacés par un dispositif de serrage ou blocage 16 tel que celui d'un type connu à vis, à friction, à ressort, à goupille ... qui assure un solide maintien en position de cet anneau de montage 7 ou 8 sur le moyeu du flasque d'extrémité de la machine.

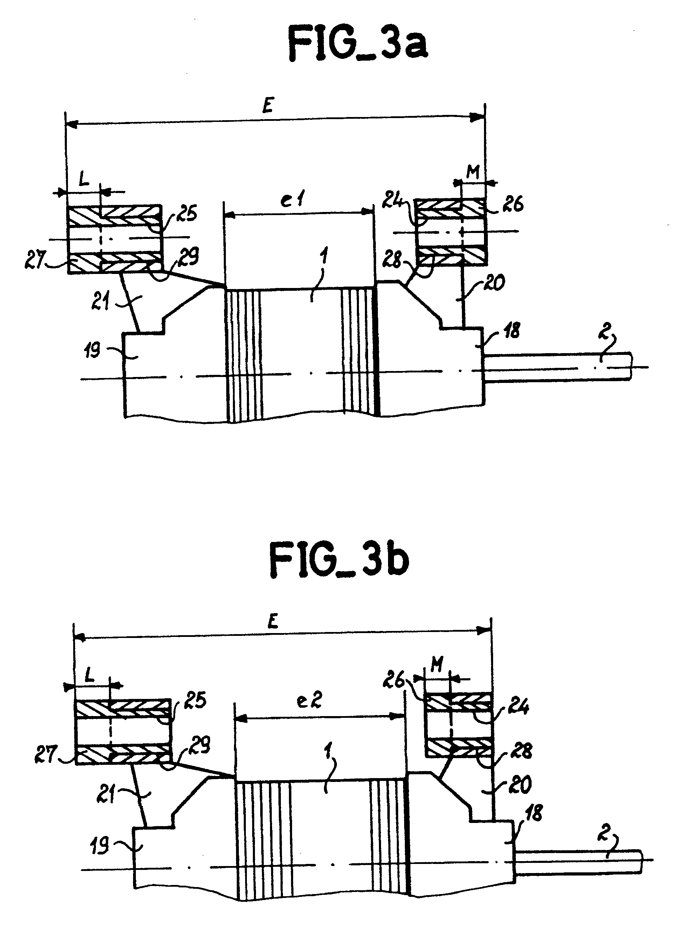

Selon une deuxième variante de réalisation, illustrée dans les figures 3a et 3b, les machines électriques sont pourvues, sur les deux extrémités de leurs circuits magnétiques d'épaisseurs e1, e2 ..., de flasques 18, 19 munies de pattes de fixation 20, 21. Ces machines électriques comprennent comme moyens de montage et d'ajustement de position de fixation et/ou de transmission d'une part des bagues ou manchons de montage 24, 25 munies respectivement de collerettes de positionnement 26, 27 de hauteurs différentes M et L, et d'autre part des trous de réception 28, 29 de ces bagues de montage 24, 25, formés respectivement dans les pattes de fixation 20, 21 des flasques 18, 19 de ces machines.

Dans cette variante de réalisation, les machines électriques ou moteurs des figures 3a et 3b, ayant des circuits magnétiques d'épaisseurs respectivement e1, e2 comprennent cependant un entraxe longitudinal identique de fixation E défini par un écartement correspondant de leurs bagues de montage 24, 25 obtenu par un arrangement adéquat dans l'orientation des collerettes de positionnement 26, 27 de ces bagues de montage 24, 25 sur les côtés intérieur ou extérieur des pattes de fixation 20, 21 des flasques 18, 19 de ces machines.

Dans la machine ou moteur électrique à circuit magnétique d'épaisseur e1 (figure 3a), les bagues de montage 24, 25 sont montées dans les trous de réception correspondants 28, 29 des pattes de fixations 20, 21, respectivement avec leurs collerettes de positionnement 26, 27 orientées sur les côtés extérieurs de ces pattes de fixation 20, 21 et définissent par leurs extrémités, situées sur les côtés extérieurs de ces pattes de fixation 20, 21, un entraxe longitudinal de fixation de valeur E. Dans la machine électrique ou moteur (figure 3b) ayant un circuit magnétique d'épaisseur e2 plus grande que e1 (figure 3a), la bague de montage 25 est montée dans le trou de réception 29 de la patte de fixation 21 avec sa collerette de positionnement 27 orientée sur le côté extérieur de la patte de fixaation 21 tandis que la bague de montage 24 est montée dans le trou de réception 28 de la patte de fixation 20 avec sa collerette de positionnement 26 orientée sur le côté intérieur de la patte de fixation 20 en vue de compenser cette différence de longueur entre e1 et e2 et maintenir constant l'entraxe longitudinal de fixation à la valeur E.

D'une manière analogue aux anneaux de positionnement 9, 10, 11, 12 des exemples précédents illustrés dans les figures 1a, 1b, 1c et 2, pour simplifier la mise en oeuvre de l'invention, les hauteurs M et L des collerettes de positionnement 26, 27 des bagues de montage 24, 25 sont réalisées égales aux valeurs préétablies pour une variation d'épaisseur e de circuit magnétique de ces machines électriques.

Dans une gamme de machines électriques d'un même type de construction, les valeurs préétablies pour une variation d'épaisseur e de circuit électrique entre deux machines consécutives sont par exemple, cinq millimètres et sept millimètres.

Selon l'invention, les anneaux de positionnement 9, 10, 11 12 et les collerettes de positionnement 26, 27 des bagues de montage 24, 25 peuvent avoir toutes autres valeurs pour leur épaisseur et leur hauteur respectivement. En effet plus les anneaux de positionnement 9, 10, 11, 12 et les collerettes de positionnement des bagues de montage 24, 25 sont nombreux en quantité et en épaisseur ou hauteur différentes, plus les possibilités de compensation de différence entre les épaisseurs e de circuits magnétiques des machines électriques pour obtenir un entraxe longitudinal identique de fixation E de ces machines, sont accrues.

Dans les machines ou moteurs électriques, les moyens décrits ci-dessus permettent par un arrangement adéquat des positions des anneaux de montage 7, 8 et des anneaux de positionnement 9, 10, 11, 12 sur les moyeux 5 et 6 ou des bagues de montage 24 25 à collerettes de positionnement 26, 27 dans les pattes de fixation 20, 21, non seulement de maintenir constants à une valeur E des entraxes longitudinaux de fixation des machines électriques mais également de modifier la position de fixation de ces machines vis-à-vis de leurs supports et de réaliser par conséquent un ajustement de position de transmission de ces machines sans modifier la position de leur poulie ou roue de transmission montée sur leur bout d'arbre 2.

Les anneaux de montage 7 et 8 sont des anneaux de type connu constitués d'un anneau en un matériau élastique protégé par une enveloppe périphérique en métal. Les bagues de montage 24, 25 et les anneaux de positionnement 9, 10, 11, 12 sont réalisées en métal ou une matière synthétique mécaniquement résistante.

Dans une fabrication d'une gamme de machines ou moteurs électriques de même type de construction mais de puissances différentes et d'entraxe identique de fixation, l'invention permet facilement et à moindre frais de standardiser la réalisation des pièces qui leur sont communes telles que flasques, arbres ..., de standardiser les outillages de leur production, de mécaniser ou automatiser même leur fabrication.

**Revendications**

1. Machine électrique, caractérisée en ce qu'elle comprend des moyens de montage et d'ajustement de position de fixation et/ou de transmission, constitués d'une part par des éléments à position réglable (7, 8, 9, 10, 11, 12, 24, 25) choisis parmi les anneaux et bagues et d'autre part par des supports (5, 6, 20, 21) de ces éléments à position réglable, formés dans des parties des flasques (3, 4, 18, 19) de la machine, choisies parmi les moyeux et les pattes de fixation de ces flasques.

2. Machine selon la revendication 1, caractérisée en ce que les moyens de montage et d'ajustement de position de fixation et/ou de transmission comprennent d'une part dans les extrémités extérieures des flasques (3, 4), deux moyeux (5, 6) servant de supports, et d'autre part deux anneaux de montage (7, 8) et plusieurs anneaux de positionnement à épaisseurs différentes (9, 10, 11, 12), montés sur ces moyeux (5, 6) et deux plaquettes d'arrêt (13, 14) fixées contre les extrémités libres de ces moyeux (5, 6) en vue d'y bloquer ces anneaux de montage (7, 8) et anneaux de positionnement (9, 10, 11, 12).

3. Machine selon la revendication 1, caractérisée en ce que les moyens de montage et d'ajustement de position de fixation et/ou de transmission comprennent d'une part des bagues de montage (24, 25) munies respectivement de collerettes de positionnement (26, 27) de hauteurs différentes, et d'autre part des trous de réception (28, 29) de ces bagues de montage (24, 25), formés respectivement dans les pattes de fixation (20, 21) des flasques (18, 19) de la machine.

4. Machine selon l'une des revendications 1 et 2, faisant partie d'une gamme de machines électriques d'un même type de constructions, ayant un rotor ou induit et un stator ou inducteur (1) définissant un circuit magnétique d'épaisseur e, et deux flasques d'extrémité (3, 4) aux deux extrémités de ce circuit magnétique, supportant des paliers de l'arbre de ce rotor et protégeant des bobinages de cette machine, caractérisée en ce qu'elle comprend d'une part un circuit magnétique pourvu d'une épaisseur e égale à l'une des valeurs préétablies pour une variation d'épaisseur e de circuit magnétique entre deux machines consécutives d'une même gamme et d'autre part dans les moyens de montage et d'ajustement de position de fixation et/ou de transmission, des anneaux de positionnement (9, 10, 11, 12) sont réalisés avec des épaisseurs égales à ces valeurs préétablies pour une variation d'épaisseur e de circuit magnétique.

5. Machine selon l'une des revendications 1 et 3, faisant partie d'une gamme de machines électriques d'un même type de construction, ayant un rotor ou induit et un stator ou inducteur (1) définissant un circuit magnétique d'épaisseur e, et deux flasques d'extrémité (18, 19) aux deux extrémités de ce circuit magnétique, support des paliers de l'arbre de ce rotor et protégeant des bobinages de cette machine, caractérisée en ce qu'elle comprend d'une part un circuit magnétique pourvu d'une épaisseur e égale à l'une des valeurs préétablies pour une variation d'épaisseur e de circuit magnétique entre deux machines consécutives d'une même gamme, et d'autre part dans les moyens de montage et d'ajustement de position de fixation et/ou de transmission, des bagues de montage (24, 25) pourvues de collerettes de positionnement (26, 27) réalisées avec des hauteurs égales à ces valeurs préétablies pour une variation d'épaisseur e de circuit magnétique.

6. Machine selon l'une des revendications 2 et 4, caractérisée en ce que dans les moyens de montage et d'ajustement de position de fixation et/ou de transmission, les moyeux (5, 6) des flasques (3, 4) et les anneaux de montage (7, 8) et de positionnement (9, 10, 11, 12) ont respectivement une section transversale et une forme intérieure choisie parmi les formes circulaires et polygonales.

7. Machine selon la revendication 6, caractérisée en ce que dans les moyens de montage et d'ajustement de position de fixation et/ou de transmission, les anneaux de montage (7, 8) ont une forme extérieure choisie parmi les formes circulaires et polygonales.

8. Machine selon l'une des revendications 4 et 5, caractérisée en ce que les valeurs préétablies pour une variation d'épaisseur e de circuit magnétique sont cinq millimètres et sept millimètres.

9. Machine selon la revendication 2, caractérisée en ce que dans les moyens de montage et d'ajustement de position de fixation et/ou de transmission, le ou les anneaux de positionnement (9,10, 11, 12) situé(s) entre une plaquette d'arrêt (13 ou 14) et un anneau de montage (7 ou 8) et cette plaquette d'arrêt sont remplacés par un dispositif de serrage ou de blocage tel que celui du type à vis, à friction, à ressort ou à goupille.

10. Machine selon l'une des revendications 2 et 4, caractérisée en ce que dans les moyens de montage et d'ajustement de position de fixation et/ou de transmission, les anneaux de positionnement (9, 10, 11, 12) sont réalisées en une matière synthétique.

11. Machine selon l'une des revendications 2 et 4, caractérisée en ce que dans les moyens de montage et d'ajustement de position de fixation et/ou de transmission, les anneaux de positionnement (9, 10, 11, 12) sont réalisés en métal.

12. Machine selon l'une des revendications 3 et 5, caractérisée en ce que dans les moyens de montage et d'ajustement de position de fixation et/ou de transmission, les bagues de montage (24, 25) sont réalisées en matière synthétique.

13. Machine selon l'une des revendications 3 et 5, caractérisée en ce que dans les moyens de montage et d'ajustement de position de fixation et/ou de transmission, les bagues de montage (24, 25) sont réalisées en métal.

## Claims

1. An electric machine, characterized in that it comprises means for mounting and adjusting the fixing and/or the transmission position, constituted on the one hand by elements having an adjustable position (7, 8, 9, 10, 11, 12, 24, 25) selected among the rings and collars, and on the other hand by support members (5, 6, 20, 21) for supporting these elements, these members having an adjustable position and being realized in portions of flasks (3, 4, 18, 19) of the machine, these portions being selected among the flaks hubs and the flaks holdfasts.

2. A machine according to claim 1, characterized in that the means for mounting and adjusting the fixing and/or transmission position comprise on the one hand in the outer ends of the flasks (3, 4) two hubs (5, 6) acting as supports and on the other hand two mounting rings (7, 8) and several positioning rings of different thickness (9, 10, 11, 12) mounted on these hubs (5, 6) and two stop-plates (13, 14) applied against the free ends of these hubs (5, 6) in view of fastening said mounting rings (7, 8) and said positioning rings (9, 10, 11, 12).

3. A machine according to claim 1, characterized in that the means for mounting and adjusting the fixing and/or transmission position comprise on the one hand mounting collars (24, 25) supplied respectively with positioning collarettes (26, 27) of different heights, and on the other hand holes (28, 29) for receiving these mounting collars (24, 25), these holes being respectively provided in the holdfasts (20, 21) of the machine flasks (18, 19).

4. A machine according to one of claims 1 and 2, constituting a member of a family of electric machines of a same construction type, this machine having a rotor or armature and a stator or inductor (1) defining a magnetic circuit of a thickness e, and two end flasks (3, 4) at both ends of this magnetic circuit which support bearings of the rotor shaft and protect the machine windings, characterized in that it comprises, on the one hand, a magnetic circuit having a thickness e equal to one of a series of preestablished values for a variation of the thickness e of the magnetic circuit between two successive machines of one family, and on the other hand, in the means for mounting and adjusting the fixing and/or transmission position, positioning rings (9, 10, 11, 12) having thicknesses equal to these preestablished values for a variation of the thickness e of the magnetic circuit.

5. A machine according to one of claims 1 and 3, constituting a member of a family of electric machines of a same construction type, this machine having a rotor or armature and a stator or inductor (1) defining a magnetic circuit of a thickness e, and two end flasks (3, 4) at both ends of this magnetic circuit which support bearings of the rotor shaft and protect the machine windings, characterized in that it comprises on the one hand a magnetic circuit having a thickness e equal to one of a series of pre-established values for a variation of the thickness e of the magnetic circuit between two successive machines of one family, and on the other hand, in the means for mounting and adjusting the fixing and/or transmission position, mounting collars (24, 25) supplied with positioning collarettes (26, 27), whose height corresponds to one of said pre-established values for a variation of the thickness e of the magnetic circuit.

6. A machine according to one of claims 2 and 4, characterized in that in the means for mounting and ajusting the fixing and/or transmission position, the hubs (5, 6) of the flasks (3, 4) and the mounting rings (7, 8) and the positioning rings (9, 10, 11, 12) present respectively a cross-section and an inner form selected among the circular and polygonal shapes.

7. A machine according to claim 6, characterized in that in the means for mounting and adjusting the fixing and/or transmission position, the mounting rings (7, 8) present an outer form selected among the circular and polygonal shapes.

8. A machine according to one of claims 4 and 5, characterized in that the preestablished values for the variation of the thickness e of the magnetic circuit are 5 mm and 7 mm.

9. A machine according to claim 2, characterized in that in the means for mounting and adjusting the fixing and/or transmission position, the at least one positioning ring (9, 10, 11, 12) located between a stop plate (13 or 14) and a mounting ring (7 or 8), and this stop plate are replaced by a tightening or locking device of for example the screw, friction, spring or bolt type.

10. A machine according to one of claims 2 and 4, characterized in that in the means for mounting and adjusting the fixing and/or transmission position, the positioning rings (9, 10, 11, 12) are made of synthetic material.

11. A machine according to one of claims 2 and 4, characterized in that in the means for mounting and adjusting the fixing and/or transmission position, the positioning rings (9, 10, 11, 12) are made of metal.

12. A machine according to one of claims 3 and 5, characterized in that in the means for mounting and adjusting the fixing and/or transmission position, the mounting collars (24, 25) are made of synthetic material.

13. A machine according to one of claims 3 and 5, characterized in that in the means for mounting and adjusting the fixing and/or transmission position, the mounting collars (24, 25) are made of metal.

**Patentansprüche**

1. Elektrische Maschine, dadurch gekennzeichnet , daß sie Mittel aufweist zum. Montieren und zum Justieren der Befestigungsund/oder Antriebslage, wobei diese Mittel einerseits aus Elementen mit regelbarer Lage (7, 8, 9, 10, 11, 12, 24, 25) bestehen, die von Ringen oder Reifen gebildet werden, und andererseits aus Trageorganen (5, 6, 20, 21) für diese Elemente mit einstellbarer Lage, wobei die Trageorgane in Flanschbereichen (3, 4, 18, 19) der Maschine ausgebildet sind, die die Form von Naben oder Laschen zur Befestigung der Flansche aufweisen.

2. Maschine nach Anspruch 1, dadurch gekennzeichnet, daß die Mittel zur Montage und zum Einstellen der Befestigungs- und/ oder Antriebslage einerseits an den äußeren Enden der Flansche (3, 4) zwei Naben (5, 6), die als Tragorgane dienen, und andererseits zwei Montageringe (7, 8) und mehrere Positionierringe unterschiedlicher Dicke (9, 10, 11, 12), die auf diesen Naben (5, 6) montiert sind, und zwei Anschlagplatten (13, 14) aufweisen, die gegen die freien Enden dieser Naben (5, 6) anliegend befestigt sind und dort die Montageringe (7, 8) und die Positionierringe (9, 10, 11, 12) blockieren.

3. Maschine nach Anspruch 1, dadurch gekennzeichnet, daß die Mittel zur Montage und zum Einstellen der Befestigungs- und/ oder Antriebslage einerseits Montagereifen (24, 25), die je mit Positionierkragen (26, 27) unterschiedlicher Höhe versehen sind, und andererseits Löcher (28, 29) zur Aufnahme dieser Montagereifen (24, 25) aufweisen, wobei diese Löcher in den Befestigungslaschen (20, 21) der Flansche (18, 19) der Maschine ausgebildet sind.

4. Maschine nach einem der Ansprüche 1 und 2, die zu einer Baureihe von elektrischen Maschinen des gleichen Konstruktionstyps gehört und einen Rotor oder Anker sowie einen Stator oder Induktor (1), die einen Magnetkreis einer Dicke e definieren, und zwei Endflansche (3, 4) an den beiden Enden des Magnetkreises besitzt, die Lager für die Welle des Rotors tragen und die Spulen der Maschine schützen, dadurch gekennzeichnet, daß die Maschine einerseits einen Magnetkreis mit einer Dicke e gleich einem von mehreren vorgegebenen Werten besitzt, wobei dieser Wert e des Magnetkreises für zwei Maschinen unterschiedlich ist, die in einer Baureihe aufeinanderfolgen, und daß andererseits in den Mitteln zur Montage und zum Einstellen der Befestigungs- und/oder Antriebslage Positionierringe (9, 10, 11, 12) verwendet werden, deren jeweilige Dicke den vorgegebenen Werten für eine Veränderung der Dicke e des Magnetkreises entspricht.

5. Maschine nach einem der Ansprüche 1 und 3, die zu einer Baureihe von elektrischen Maschinen des gleichen Konstruktionstyps gehört und einen Rotor oder Anker sowie einen Stator oder Induktor (1), die einen Magnetkreis einer Dicke e definieren, und zwei Endflansche (3, 4) an den beiden Enden des Magnetkreises besitzt, die Lager für die Welle des Rotors tragen und die Spulen der Maschine schützen, dadurch gekennzeichnet, daß die Maschine einerseits einen Magnetkreis mit einer Dicke e gleich einem von mehreren vorgegebenen Werten besitzt, wobei dieser Wert e des Magnetkreises für zwei Maschinen unterschiedlich ist, die in einer Baureihe aufeinanderfolgen, und daß andererseits in den Mitteln zur Montage un dzum Einstellen der Befestigungs- und/oder Antriebslage Montagereifen (24, 25) mit Positionierkragen (26, 27) verwendet werden, deren jeweilige Höhe den vorgegebenen Werten für eine Veränderung der Dicke e des Magnetkreises entspricht.

6. Maschine nach einem der Ansprüche 2 und 4, dadurch gekennzeichnet, daß in den Mitteln zur Montage und zur Einstellung der Befestigungs- und/oder Antriebslage die Naben (5, 6) der Flansche (3, 4) und die Montageringe (7, 8) sowie die Positionierringe (9, 10, 11, 12) jeweils einen Querschnitt und eine Innenform aufweisen, die aus kreisförmigen und polygonalen Formen ausgewählt sind.

7. Maschine nach Anspruch 6, dadurch gekennzeichnet, daß in den Mitteln zur Montage und zum Einstellen der Befestigungs-und/oder Antriebslage die Montageringe (7, 8) eine Außenform besitzen, die kreisförmig oder polygonal ist.

8. Maschine nach einem der Ansprüche 4 und 5, dadurch gekennzeichnet, daß die vorgegebenen Werte für eine Veränderung der Dicke e des Magnetkreises 5 mm und 7 mm sind.

9. Maschine nach Anspruch 2, dadurch gekennzeichnet, daß in den Mitteln zur Montage und zum Einstellen der Befestigungs-und/oder Antriebslage der Positionierring bzw. die Positionierringe (9, 10, 11, 12), die sich zwischen einer Anschlagplatte (13 oder 14) und einem Montagering (7 oder 8) befinden und diese Anschlagplatte selbst durch eine Spann- oder Blokkiervorrichtung ersetzt sind, z.B. vom Schraubentyp, vom Reibungstyp, vom Federtyp oder mit Stift.

10. Maschine nach einem der Ansprüche 2 und 4, dadurch gekennzeichnet, daß in den Mitteln zur Montage und Einstellung der Befestigungs- und/oder Antriebslage die Positionierringe (9, 10, 11, 12) aus Kunststoff bestehen.

11. Maschine nach einem der Ansprüche 2 und 4, dadurch gekennzeichnet, daß in den Mitteln zur Montage und Einstellung der Befestigungs- und/oder Antriebslage die Positionierringe (9, 10, 11, 12) aus Metall bestehen.

12. Maschine nach einem der Ansprüche 3 und 5, dadurch gekennzeichnet, daß in den Mitteln zur Montage und Einstellung der Befestigungs- und/oder Antriebslage die Montagereifen (24, 25) aus Kunststoff sind.

13. Maschine nach einem der Ansprüche 3 und 5, dadurch gekennzeichnet, daß in den Mitteln zur Montage und Einstellung der Befestigungs- und/oder Antriebslage die Montagereifen (24, 25) aus Metall sind.

FIG_1a

FIG_1b

FIG_1c

FIG_2

## FIG_3a

## FIG_3b